(19) **Europäisches Patentamt European Patent Office Office européen des brevets**

(11) **EP 1 873 876 B1**

(12) **FASCICULE DE BREVET EUROPEEN**

(45) Date de publication et mention de la délivrance du brevet:
**12.05.2010 Bulletin 2010/19**

(51) Int Cl.:
*H01S 3/30* (2006.01)   *H01S 3/067* (2006.01)

(21) Numéro de dépôt: **07110285.9**

(22) Date de dépôt: **14.06.2007**

(54) **Amplificateur à effet Raman comprenant des fibres optiques PCF et procédé de fabrication d'un amplificateur à effet Raman comprenant des fibres PCF**

Verstärker mit Raman-Effekt, der PCF-Fasern umfasst, und Verfahren zur Herstellung eines solchen Verstärkers mit Raman-Effekt

Raman effect amplifier comprising PCF optical fibres and method of manufacturing a Raman effect amplifier comprising PCF fibres

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **27.06.2006 FR 0652666**

(43) Date de publication de la demande:
**02.01.2008 Bulletin 2008/01**

(73) Titulaire: **Alcatel Lucent**
**75008 Paris (FR)**

(72) Inventeurs:
  • **Melin, Gilles**
    **91400 Orsay (FR)**
  • **Martinelli, Catherine**
    **38000 Grenoble (FR)**
  • **Burov, Ekaterina**
    **92100 Boulogne-Billancourt (FR)**

(74) Mandataire: **Sciaux, Edmond**
**Compagnie Financière Alcatel**
**Intellectual Property & Standards**
**54 Rue La Boétie**
**75008 Paris (FR)**

(56) Documents cités:
WO-A-03/055017        US-A- 4 784 450
US-A1- 2002 081 086   US-A1- 2002 159 139
US-A1- 2004 114 641   US-A1- 2004 263 949

• ROY ET AL: "Photonic crystal fibres for lasers and amplifiers" COMPTES RENDUS - PHYSIQUE, ELSEVIER, PARIS, FR, vol. 7, no. 2, mars 2006 (2006-03), pages 224-232, XP005451366 ISSN: 1631-0705

# Description

La présente invention concerne un amplificateur de signaux optiques, basé sur l'effet Raman, comprenant des fibres optiques PCF ainsi qu'un procédé de fabrication d'un tel amplificateur de signaux optiques.

Une fibre optique peut comprendre une microstructure, formée de cavités ou de trous, qui confinent des signaux optiques transmis par cette fibre optique dans son coeur. Dans ce cas, une telle fibre est dénommée fibre microstructurée, fibre photonique ou encore fibre PCF pour « Photonic Crystal Fiber » en anglais.

Une telle fibre PCF présente des caractéristiques de transmission des signaux optiques remarquables, par exemple de fortes valeurs négatives de dispersion chromatique ou une surface effective A pouvant être extrêmement élevée ou extrêmement faible.

Dans ce dernier cas, lorsqu'une fibre PCF présente une surface effective A réduite de l'ordre de 2 à 20 $\mu m^2$, son efficacité d'amplification Raman $C_R$ est importante, cette efficacité étant inversement proportionnelle à la surface effective A de la fibre selon la formule.

$$C_R = g_r / A$$

où $g_r$ est le coefficient matériau de diffusion Raman.

L'utilisation d'une fibre PCF présentant une surface effective réduite en amplification Raman présente toutefois l'inconvénient de soumettre le signal amplifié à des problèmes relatifs à une modification de sa polarisation comme détaillé ci-dessous.

L'état de polarisation d'un signal optique peut être décrit comme une combinaison de deux modes électromagnétiques qui ne se propagent pas à la même vitesse dans une fibre si cette dernière présente de la biréfringence. Dans ce cas, cette différence de vitesse provoque un déphasage entre ces deux composantes du signal, et par conséquent une variation de l'état de polarisation du signal transmis.

Une telle variation de polarisation dans un signal transmis par une fibre est mesurée par sa dispersion du mode de polarisation ou PMD pour « Polarization Mode Dispersion » en anglais. Il est également connu de mesurer le retard, entre les modes de polarisation le plus rapide et le plus lent d'un signal, ce retard étant dénommé par la suite décalage de groupe ou D.G.D. pour « Differential Group Delay » en anglais.

Des inhomogénéités présentes dans une fibre PCF, notamment dans sa microstructure, provoquent des variations de la biréfringence de cette fibre d'autant plus importantes que la surface effective est réduite.

Pour limiter les variations de polarisation d'un signal, on peut utiliser des fibres non microstructurées de faible PMD, telle que la fibre hautement non linéaire HNLF fabriquée par la société Sumitomo. Toutefois cette solution ne permet pas d'obtenir des fibres amplificatrices de très haute efficacité Raman atteignant une amplification de l'ordre de 6W⁻¹km⁻¹.

On pourra se référer aux documents suivants qui illustrent l'arrière-plan technologique de l'invention :

1) Le document US-4,784,450 concerne un procédé de génération de nouvelles longueurs d'onde de rayonnement optique à partir d'une source de rayonnement cohérent.

2) L'article de ROY et al. Intitulé "Photonic crystal fibres for lasers and amplifiers" mentionnent l'utilisation de fibres PCF pour l'amplification par effet Raman.

3) Le document WO-03/055017 concerne l'utilisation de fibres microstructurées pour l'amplification par effet Raman.

4) Le document US-2002/0081086 décrit une fibre optique comprenant un coeur photosensible reliant un amplificateur optique à un laser de pompage.

5) Le document US-2004/0263949 concerne des fibres optiques dopées généralement à l'erbium utilisées pour l'amplification optique classique (EDFA).

6) Le document US-2002/0159139 0263949 se rapporte à un système d'amplification comportant une fibre optique dopée à l'erbium.

7) Le document US -2004/0114641 concerne un laser utilisant des fibres PCF pour le contrôle de la dispersion.

La présente invention, définit dans les revendications 1-9, résulte d'une première constatation propre à l'invention selon laquelle la biréfringence d'une fibre PCF se caractérise par la présence d'un premier axe de propagation rapide du signal et d'un second axe de propagation lente du signal dans la fibre, les variations de polarisation d'un signal transmis dans une fibre optique PCF biréfringente étant dépendantes de l'orientation ou de la position de ces axes rapide et lent le long de la fibre.

L'invention résulte aussi d'une seconde constatation propre à l'invention selon laquelle la biréfringence d'une fibre PCF, considérée comme un effet parasite problématique, peut être accrue pour devenir un phénomène avantageux. De fait, la présente invention concerne un amplificateur à effet Raman comprenant au moins deux fibres PCF associées à une pompe transmettant un signal de pompe dans au moins une de ces fibres PCF. Ces deux fibres PCF étant à maintien de polarisation, une première de ces deux fibres PCF présente un axe lent, respectivement un axe rapide, de propagation colinéaire avec un axe rapide, respectivement un axe lent, de propagation de la seconde de ces deux fibres PCF afin qu'un décalage de groupe induit dans un signal optique par la première fibre PCF soit pratiquement compensé par un décalage de groupe induit dans ce signal optique par la seconde fibre PCF.

Un tel amplificateur permet l'utilisation de fibres PCF présentant une faible surface effective A, de l'ordre de 2 à 20 $\mu m^2$, avec par exemple des coefficients Raman d'amplification élevés et supérieurs à 6 W$^{-1}$ km$^{-1}$, typiquement de l'ordre de 20 W$^{-1}$ Km$^{-1}$, sans que le signal optique amplifié ne soit dépolarisé par l'amplificateur. De fait, le décalage de groupe ou DGD induit par une des fibres PCF considérées est corrigé, dans l'amplificateur, par l'autre fibre PCF considérée, ce qui limite la variation de polarisation du signal à travers l'amplificateur.

L'invention entraîne l'utilisation d'une jonction entre deux fibres distinctes, et par conséquent des pertes de signal au niveau de la jonction. Mais ces inconvénients se révèlent inférieurs à l'avantage obtenu notamment sur le gain Raman.

Dans une réalisation, les fibres PCF ont une biréfringence comprise entre 10$^{-3}$ et 10$^{-4}$, ces valeurs élevées permettant d'imposer un décalage connu au signal transmis par chacune des deux fibres.

Selon une réalisation, au moins une des deux fibres PCF est comprise entre 100 et 5 000 mètres, de telles longueurs permettant de réaliser des amplificateurs relativement compacts.

Dans une réalisation, la pompe comprend une unique diode semi-conductrice, ce qui limite le coût et la taille de la pompe.

L'invention concerne également un procédé de fabrication d'un amplificateur à effet Raman à l'aide d'au moins deux fibres PCF et d'une pompe destinée à transmettre un champ de pompe ou signal de pompe dans au moins une de ces fibres PCF, caractérisé en ce que, ces deux fibres PCF étant à maintien de polarisation, il comprend l'étape de joindre deux fibres PCF de telle sorte qu'une première de ces deux fibres présente un axe lent, respectivement un axe rapide, de propagation, colinéaire avec un axe rapide, respectivement un axe lent, de propagation de la seconde de ces deux fibres PCF afin que le décalage de groupe induit dans un signal optique par la première fibre PCF soit pratiquement compensé par un décalage de groupe induit dans ce signal optique par la seconde fibre PCF.

Finalement, l'invention concerne aussi un procédé d'amplification d'un signal optique par effet Raman, ce procédé mettant en oeuvre au moins deux fibres PCF faible surface effective, ces deux fibres PCF étant associées à une pompe à transmettant un signal de pompe dans au moins une de ces fibres PCF, caractérisé en ce que, ces deux fibres PCF étant à maintien de polarisation, une première de ces deux fibres PCF présente un axe lent, respectivement un axe rapide, de propagation colinéaire avec un axe rapide, respectivement un axe lent, de propagation de la seconde de ces deux fibres PCF de telle sorte qu'un décalage de groupe induit dans un signal optique par la première fibre PCF soit pratiquement compensé par un décalage de groupe induit dans ce signal optique par la seconde fibre PCF.

Selon une réalisation, le procédé d'amplification comprend l'étape supplémentaire de maintenir le décalage de groupe induit par l'amplificateur inférieur à 5 ps.

Dans une réalisation, le procédé d'amplification comprend l'étape supplémentaire de maintenir la dispersion chromatique de l'amplificateur comprise entre -100 et -2000 ps.nm$^{-1}$.km$^{-1}$.

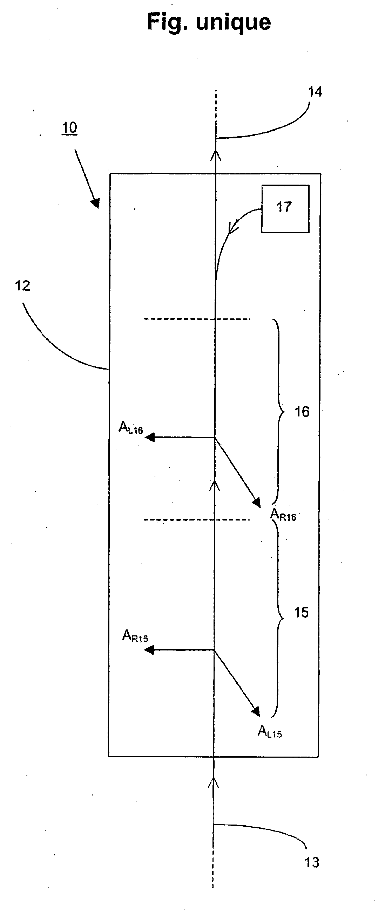

D'autres caractéristiques et avantages de l'invention apparaîtront avec la description d'une réalisation de l'invention décrite ci-dessous, à titre illustratif et non limitatif, en faisant référence à l'unique figure ci-jointe qui est un schéma d'un système 10 d'amplification Raman mettant en oeuvre un amplificateur 12 conforme à l'invention.

Plus précisément, ce système 10 comprend des fibres monomodes 13 en entrée ou 14 en sortie pour guider un signal optique jusqu'à l'amplificateur 12 ou recevoir ce signal optique en sortie de l'amplificateur 12 lorsque ce signal optique a été amplifié dans les fibres PCF 15 et 16 de l'amplificateur.

Les fibres 13 et 14 monomodes sont formées par deux matériaux présentant des indices optiques distincts, le matériau d'indice optique le plus élevé constituant le cceur de la fibre tandis que le matériau d'indice optique le plus faible formant une gaine optique, ou « optical cladding » en anglais, autour de ce coeur. Les fibres PCF 15 et 16 présentent une microstructure formée par des tubes creux entourant le cceur de la fibre PCF.

Ce coeur peut comprendre un matériau, par exemple du germanium, du bore ou du phosphore, présentant une forte efficacité Raman et un indice optique plus élevé que l'indice optique du matériau formant la gaine optique dans laquelle sont logés les tubes.

Conformément à l'invention, les fibres PCF 15 et 16 présentent une forte biréfringence $\Delta n$ de l'ordre de 10$^{-4}$ à 10$^{-3}$. Dans ce cas, ces fibres 15 et 16 sont dites à maintien de polarisation et elles présentent chacune un axe rapide $A_R$ et un axe lent $A_L$ de propagation d'ondes électromagnétiques selon une direction constante sur leur longueur.

Grâce à une telle biréfringence contrainte, la biréfringence parasite provoquée par les inhomogénéités de ces fibres 15 et 16 ont un effet limité et il est possible de contrôler la variation de polarisation introduite par chacune des fibres PCF 15 ou 16 indépendamment des inhomogénéités présent dans ces fibres.

Un tel contrôle de la PMD des fibres PCF 15 et 16 permet d'utiliser leur faible surface effective, de l'ordre de 2 à 10 $\mu m^2$, pour obtenir des coefficients Raman d'amplification élevés, de l'ordre de 20 W-1.km-1.

De façon pratique, la compensation entre la variation de polarisation, ou le décalage de groupe, introduite par la fibre 15 et la variation de polarisation introduite par la fibre 16 est obtenue en inversant les axes rapide $A_{R16}$ et lent $A_{L16}$ de cette fibre 16 par rapport aux axes rapide $A_{R15}$ et lent $A_{L15}$ de la fibre 15.

Ainsi, l'axe lent $A_{L15}$ de la première fibre 15 coïncide avec l'axe rapide $A_{R16}$ de la seconde fibre 16 tandis que l'axe rapide $A_{R15}$ de la première fibre 15 coïncide avec l'axe lent $A_{L16}$ de la seconde fibre 16.

Dans ce cas, la première fibre 15 provoque les changements de polarisation. Ces changements de polarisation peuvent être compensés par les changements de polarisation que provoque la seconde fibre 16. Cette compensation s'effectue en pratique avec une tolérance requise $\Delta\tau$.

En d'autres termes, le décalage de groupe, ou DGD, $\Delta\tau_{15}$ induit par la première fibre 15 dans le signal transmis est égal, en valeur absolue, au décalage de groupe, ou DGD, $\Delta\tau_{16}$ induit par la seconde fibre 16 dans ce même signal à, $\Delta_\tau$ près, où :

$$\Delta\tau \simeq |\Delta\tau_{16} - \Delta\tau_{15}|.$$

De façon concrète, on peut considérer deux fibres PCF 15 et 16 de biréfringence $\Delta n_{15}$ et $\Delta n_{16}$ égales à $10^{-4}$ pour transmettre un signal modulé de largeur fréquentielle $\Delta\nu$ de 10GHz. Dans cas, il est possible de limiter la dépolarisation du signal, avec une tolérance $\Delta\tau$ de l'ordre de 0,5 ps, si la fibre 16 a une longueur égale à la longueur de la fibre 15 à 1 mètre près.

En effet, le décalage de groupe $\Delta\tau_{15}$ induit par la première fibre 15 vaut, au premier ordre :

$$\Delta\tau_{15} \simeq \Delta n_{15} . L_{15} / c$$

Le décalage de groupe $\Delta T_{16}$ induit par la deuxième fibre vaut, au premier ordre:

$$\Delta\tau_{16} \simeq \Delta n_{16} . L_{16} / c$$

où $L_{16}$ et $L_{15}$ représentent respectivement les longueurs des fibres 16 et 15, et où c représente la vitesse de propagation d'une onde électromagnétique, de valeur égale à $3.10^8$ m/s.

Les axes lent et rapide de la seconde fibre 16 étant inversés par rapport aux axes lent et rapide de la première fibre 15, le décalage $\Delta\tau$ de groupe résiduel de l'amplificateur s'exprime par :

$$|\Delta\tau_{16} - \Delta\tau_{15}| = \Delta\tau$$

Par ailleurs, cette tolérance $\Delta\tau$ requise de l'ordre de 0,5 ps peut s'exprimer de la façon suivante :

$$\Delta\tau.2\pi. \Delta\nu < 0.01\pi$$

D'où on obtient, à l'aide des trois équations précédemment écrites :

$$\Delta n_{15}. |L_{16} - L_{15}|. 2\pi. \Delta\nu/c < 0.01\pi$$

Ce qui entraîne une différence de longueur $|L_{15} - L_{16}|$ d'environ 1 mètre avec les valeurs déjà indiquées. A ce stade, il convient de noter que l'invention permet d'obtenir des retards tolérés de l'ordre 0,1 ps.

L'invention présente aussi l'avantage de réduire les effets non linéaires qui détériorent un signal optique tels que l'automodulation de phase, ou « self-phase modulation » (SPM), et la modulation de phrase croisée ou «cross-phase modulation » (XPM).

En effet, un signal se propage généralement dans un amplificateur conforme à l'invention selon un axe qui n'est pas confondu avec un axe rapide ou lent d'une des fibres PCF de telle sorte que les différents composants fréquentiels de ce signal subissent des variations d'état de polarisation différentes.

Ces composantes fréquentielles ne sont alors plus parallèles et leurs interactions SPM et XPM sont limitées avant de retrouver leur parallélisme initial en sortie de la seconde fibre PCF 16.

Cet avantage apparaît lorsque le signal n'est pas polarisé le long d'un axe rapide ou lent de la fibre, ce qui est d'autant plus probable que le nombre de dispositifs d'amplification Raman utilisés est élevé comme dans un système de transmission complet.

Par ailleurs, un amplificateur conforme à l'invention peut présenter une dispersion chromatique fortement négative, par exemple ayant une valeur comprise entre -2000 et -100 $ps.nm^{-1}.km^{-1}$.

Un amplificateur conforme à l'invention peut comprendre une pompe adaptée à l'amplification Raman relativement compacte puisque le signal de pompe peut être polarisé. En introduisant ce signal de pompe selon un état de polarisation à 45° par rapport aux axes lents et rapides des fibres PCF 15 et 16 considérées, on effectue une amplification Raman avec un gain indépendant de l'état de polarisation d'entrée du signal amplifié.

A titre d'exemple, la pompe adaptée à l'amplification Raman 17 peut être composée par une seule diode semi-conductrice au lieu d'une combinaison de deux diodes semi-conductrices. De plus, le signal de pompe fourni par la pompe 17 peut être injecté dans les fibres PCF dans le sens de propagation du signal amplifié (co-directionnel) ou, comme dans la réalisation préférée, dans un sens opposé à celui de la propagation du signal amplifié (contra-directionnel).

De plus, cette injection peut intervenir à l'entrée ou en sortie de la première fibre 15 ou de la seconde fibre 16 de telle sorte que l'amplification se réalise à travers une ou les deux fibres 15 et 16,

Finalement, il convient de noter qu'une fibre PCF à maintien de polarisation ne présente pas d'axe de symétrie d'ordre supérieur à 2, ce qui permet néanmoins d'envisager différentes formes en fonction des applications considérées.

## Revendications

**1.** Amplificateur (12) à effet Raman comprenant au moins deux fibres PCF (15, 16) associées à une pompe optique (17) transmettant un signal de pompe dans au moins une de ces fibres PCF (15, 16), **caractérisé en ce que**, ces deux fibres PCF (15, 16) étant à maintien de polarisation, une première (15) de ces deux fibres PCF présente un axe lent ($A_{L15}$), respectivement un axe rapide ($A_{R15}$), de propagation co-linéaire avec un axe rapide ($A_{R16}$), respectivement un axe lent ($A_{L16}$), de propagation de la seconde (16) de ces deux fibres PCF afin qu'un décalage de groupe $\Delta_{\tau15}$ induit dans un signal optique par la première fibre PCF (15) soit pratiquement compensé par un décalage de groupe $\Delta_{\tau16}$ induit dans ce signal optique par la seconde fibre PCF (16).

**2.** Amplificateur (12) selon la revendication 1 dans lequel au moins une des deux fibres PCF (15, 16) présente une surface effective comprise entre 2 et 20 $\mu m^2$.

**3.** Amplificateur (12) selon la revendication 1 ou 2 dans lequel les fibres PCF (15, 16) ont une biréfringence comprise entre $10^{-3}$ et $10^{-4}$.

**4.** Amplificateur (12) selon la revendication 1, 2 ou 3 dans lequel la longueur d'au moins une des deux fibres PCF (15, 16) est comprise entre 100 et 5000 mètres.

**5.** Amplificateur (12) selon l'une des revendications précédentes dans lequel le coefficient d'amplification Raman d'au moins une des deux fibres PCF (15,16) est supérieur à 6 $W^{-1}.km^{-1}$.

**6.** Amplificateur selon l'une des revendications précédentes dans lequel la pompe optique (17) comprend une unique diode semi-conductrice.

**7.** Procédé d'amplificateur (12) d'un signal optique par effet Raman, ce procédé mettant en oeuvre un amplificateur comprenant au moins deux fibres PCF (15, 16) associées à une pompe optique (17) transmettant un signal de pompe dans au moins une de ces deux fibres PCF (15, 16), **caractérisé en ce que**, ces deux fibres PCF (15, 16) étant à maintien de polarisation, une première (15) de ces deux fibres PCF présente un axe lent ($A_{L15}$) respectivement un axe rapide ($A_{R15}$), de propagation colinéaire avec un axe rapide ($A_{R16}$), respectivement un axe lent ($A_{L16}$), de propagation de la seconde (16) de ces deux fibres PCF de telle sorte qu'un décalage de groupe $\Delta_{\tau15}$ induit dans un signal optique par la première fibre PCF (15) soit pratiquement compensé par un décalage de groupe $\Delta_{\tau16}$ induit dans ce signal optique par la seconde fibre PCF (16).

**8.** Procédé d'amplification selon la revendication 7 comprenant l'étape supplémentaire de maintenir le décalage de groupe $\Delta_{\tau} = |\Delta_{\tau16} - \Delta_{\tau15}|$ induit par l'amplificateur inférieur à 5 ps.

**9.** Procédé d'amplification selon l'une des revendications 7 et 8 comprenant l'étape supplémentaire de maintenir la dispersion chromatique de l'amplificateur comprise entre -100 et -2000 $ps.nm^{-1}.km^{-1}$.

## Claims

**1.** Raman effect amplifier (12) comprising at least two PCF fibres (15, 16) associated with an optical pump (17) sending a pump signal in at least one of these PCF fibres (15, 16), **characterized in that**, with these two PCF fibres (15, 16) being polarization maintaining fibres, a first (15) of these two PCF fibres has a slow axis ($A_{L15}$), or a fast axis ($A_{R15}$) respectively, for co-linear propagation with a fast axis ($A_{R16}$), or a slow axis ($A_{L16}$) respectively, for propagation of the second (16) of these two PCF fibres in order for a group shift $\Delta_{T15}$ induced in an optical signal by the first PCF fibre (15) to be practically compensated by a group shift $\Delta_{T16}$ induced in this optical signal by the second PCF fibre (16).

**2.** Amplifier (12) according to claim 1 in which at least one of the two PCF fibres (15, 16) has an effective area of between 2 and 20 $\mu m^2$,

**3.** Amplifier (12) according to claim 1 or 2 in which the PCF fibres (15, 16) have a birefringence of between $10^{-3}$ and $10^{-4}$.

**4.** Amplifier (12) according to claim 1, 2 or 3 in which the length of at least one of the two PCF fires (15, 16) is between 100 and 5000 metres,

**5.** Amplifier (12) according to one of the previous claims, in which the Raman amplification coefficient of at least one of the two PCF fibres (15, 16) is greater than 6 $W^{-1}.km^{-1}$.

**6.** Amplifier according to one of the previous claims in which the optical pump (17) comprises a single semiconductor diode.

**7.** Amplification method (12) of an optical signal by Raman effect, said method implementing an amplifier comprising at least two PCF fibres (15, 16) associated with an optical pump (17) sending a pump signal in at least one of these two PCF fibres (15, 16), **characterized in that**, with these two PCF fibres (15, 16) being polarization maintaining fibres, a first (15) of these two PCF fibres has a slow axis ($A_{L15}$), or a fast axis ($A_{R15}$) respectively, for co-linear propagation with a fast axis ($A_{R16}$), or a slow axis ($A_{L16}$) respectively, for propagation of the second (16) of these two PCF fibres, such that a group shift $\Delta\tau_{15}$ induced in an optical signal by the first PCF fibre (15) is practically compensated by a group shift $\Delta_{T16}$ induced in this optical signal by the second PCF fibre (16).

8. Amplification method according to claim 7 comprising the additional stage of maintaining the group shift $\Delta_T = /\Delta_{T16} - \Delta_{T15}/$ induced by the amplifier below 5 ps.

9. Amplification method according to one of claims 7 and 8 comprising the additional stage of maintaining the chromatic dispersion of the amplifier between -100 and -2000 ps.nm$^{-1}$.km$^{-1}$

**Patentansprüche**

1. Verstärker (12) mit Raman-Erfekt mit mindestens zwei einer optischen Pumpe (17) zugeordneten PeF-Fasern (15, 16), welcher in mindestens einer dieser PCF-Fasern (15, 16) ein Pumpsignal überträgt, **dadurch gekennzeichnet, dass** diese beiden PCF-Fasern (15, 16) polarisationserhaltend sind, wobei eine erste (15) dieser beiden PCF-Fasern eine Slow-Axis ($A_{L15}$), beziehungsweise eine Fast-Axis ($A_{R15}$) für die kollineare Ausbreitung mit einer Fast-Axis ($A_{R16}$), beziehungsweise einer Slow-Axis ($A_{L16}$) für die Ausbreitung der zweiten (16) dieser beiden PCF-Fasern aufweist, so dass eine von der ersten PCF-Faser (15) in einem optischen Signal induzierte Gruppenverschiebung $\Delta_{\tau15}$ praktisch durch eine von der zweiten PCF-Faser (16) in diesem optischen Signal induzierte Gruppenverschiebung $\Delta_{\tau16}$ kompensiert wird.

2. Verstärker (12) nach Anspruch 1, wobei mindestens eine der beiden PCF-Fasern (15, 16) eine effektive Oberfläche von 2 bis 20 $\mu$m$^2$ aufweist.

3. Verstärker (12) nach Anspruch 1 oder 2, wobei die PCF-Fasern (15, 16) eine Doppelbrechung von 10$^{-3}$ bis 10$^{-4}$ aufweisen.

4. Verstärker (12) nach Anspruch 1, 2 oder 3, wobei die Länge mindestens einer der beiden PCF-Fasern (15, 16) zwischen 100 und 5000 Meter beträgt.

5. Verstärker (12) nach einem der vorstehenden Ansprüche, wobei der Raman-Verstärkungskoeffizient mindestens einer der beiden PCF Fasern (15, 16) höher als 6 W$^{-1}$.km$^{-1}$ ist.

6. Verstärker (12) nach einem der vorstehenden Ansprüche, wobei die optische Pumpe (17) eine einzige Halbleiterdiode umfasst

7. Verfahren zum Verstärken (12) eines optischen Signals durch Raman-Effekt, wobei das Verfahren einen Verstärker mit mindestens zwei einer optischen Pumpe (17) zugeordneten PCF-Fasern (15,16) zum Übertragen eines Pumpsignals über mindestens eine dieser beiden PCF-Fasern (15, 16) umfasst, **dadurch gekennzeichnet, dass** diese beiden PCF-Fasern (15,16) polarisationserhaltend sind, wobei eine erste (15) dieser beiden PCF-Fasern eine Slow-Axis ($A_{L15}$), beziehungsweise eine Fast-Axis ($A_{R15}$) für die kollineare Ausbreitung mit einer Fast-Axis ($A_{R16}$), beziehungsweise einer Slow-Axis ($A_{L16}$) für die kollineare Ausbreitung der zweiten (16) dieser beiden PCF-Fasern aufweist, so dass eine von der ersten PCF-Faser (15) in einem optischen Signal induzierte Gruppenverschiebung $\Delta_{\tau15}$ praktisch durch eine von der zweiten PCF-Faser (16) in diesem optischen Signal induzierte Gruppenverschiebung $\Delta_{\tau16}$ kompensiert wird.

8. Verstärkungsverfahren nach Anspruch 7, umfassend den zusätzlichen Schritt des Erhaltens der von dem Verstärker induzierten Gruppenverschiebung $\Delta_\tau = (\Delta_{\tau16} - \Delta_{\tau15})$ unter 5 ps.

9. Verstärkungsverfahren nach einem der Ansprüche 7 und 8, umfassend den zusätzlichen Schritt des Erhaltens der chromatischen Dispersion des Verstärkers zwischen -100 und -2000 ps.nm$^{-1}$.km$^{-1}$.

# Fig. unique

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4784450 A
- WO 03055017 A
- US 20020081086 A
- US 20040263949 A
- US 20020159139 A
- US 20040114641 A